# EUROPEAN PATENT APPLICATION

(11) **EP 4 105 179 A1**
(43) Date of publication of application: **21.12.2022**
(21) Application number: 21753636.6
(22) Date of filing: 21.01.2021
(51) Int. Cl.: C01G 25/00, H01M 4/131, H01M 4/36, H01M 4/505, H01M 4/525, H01M 4/62, H01M 10/052, H01M 10/0562

(54) **COATED POSITIVE ELECTRODE ACTIVE SUBSTANCE, POSITIVE ELECTRODE MATERIAL, BATTERY, AND METHOD FOR PRODUCING COATED POSITIVE ELECTRODE ACTIVE SUBSTANCE**

(30) Priority: 14.02.2020 JP 2020023803
(71) Applicant: Panasonic Intellectual Property Management Co., Ltd., Osaka-shi, Osaka 540-6207 (JP)
(72) Inventor: FUJINOKI, Norihito, Osaka 540-6207 (JP)
(74) Representative: Eisenführ Speiser
(86) International application number: PCT/JP2021/002004
(87) International publication number: WO 2021/161752

(57) **Abstract**

A coated positive electrode active material 100 according to the present disclosure includes a positive electrode active material 101 and a coating layer 102 coating at least partially a surface of the positive electrode active material 101. The coating layer 102 includes Li, Zr, and F. A material of the coating layer 102 may be represented, for example, by composition formula (1) Li_{α}Zr_{β}F_{γ} ... Formula (1). In the composition formula (1), the symbols α, β, and γ satisfy 0 < α < 8, 0 < β ≤ 1.1, and 0 < γ ≤ 8. A positive electrode material 1000 of the present disclosure includes the coated positive electrode active material 100 and a first solid electrolyte 103. A battery of the present disclosure includes a positive electrode including the positive electrode material 1000, a negative electrode, and an electrolyte layer provided between the positive electrode and the negative electrode.

## Description

### TECHNICAL FIELD

The present disclosure relates to a coated positive electrode active material, a positive electrode material, a battery, and a method for manufacturing a coated positive electrode active material.

### BACKGROUND ART

Patent Literature 1 discloses a positive electrode material including: a positive electrode active material whose surface is coated with a coating material; and a halide solid electrolyte. Patent Literature 1 discloses, as the halide solid electrolyte, a solid electrolyte containing yttrium and chlorine and/or bromine.

Patent Literature 2 discloses an all-solid-state lithium battery including a positive electrode active material whose surface is coated with a lithium-ion conductive oxide having substantially no electronic conductivity.

### CITATION LIST

### Patent Literature

Patent Literature 1: WO 2019/135322
Patent Literature 2: JP 4982866 B

### SUMMARY OF INVENTION

### Technical Problem

The present disclosure provides a positive electrode active material in which generation of a high-resistance layer between the positive electrode active material and a solid electrolyte can be suppressed.

### Solution to Problem

The coated positive electrode active material of the present disclosure includes:
a positive electrode active material; and
a coating layer coating at least partially a surface of the positive electrode active material, wherein
the coating layer includes Li, Zr, and F.

### Advantageous Effects of Invention

The present disclosure provides a positive electrode active material in which generation of a high-resistance layer between the positive electrode active material and a solid electrolyte can be suppressed.

### BRIEF DESCRIPTION OF DRAWINGS

FIG. 1 is a cross-sectional view showing the schematic structure of a positive electrode material according to Embodiment 1.
FIG. 2 is a cross-sectional view showing the schematic structure of a battery according to Embodiment 2.

### DESCRIPTION OF EMBODIMENTS

Hereinafter, embodiments of the present disclosure will be described with reference to the drawings.

All the descriptions below show comprehensive or specific examples. The numerical values, compositions, shapes, film thicknesses, electrical properties, structures of secondary batteries, electrode materials, etc. shown below are merely examples and do not intend to limit the present disclosure. In addition, elements that are not recited in any independent claim, which defines the most generic concept, are optional ones.

### (Findings on which the Present Disclosure is Based)

As a result of intensive studies by the present inventors, the present inventors have found the following problem in a battery formed using a positive electrode material including a positive electrode active material and a halide solid electrolyte containing chlorine or bromine; the halide solid electrolyte is oxidatively decomposed during charge and thus a high-resistance layer is generated between the positive electrode active material and the solid electrolyte.

Specifically, in a material containing chlorine or bromine as anions constituting a solid electrolyte, in the case where a positive electrode active material having a potential relative to Li of 3.7 V or more on average is used, the solid electrolyte might be oxidatively decomposed by an oxidation reaction during charge and thus its oxidative decomposition product might function as a high-resistance layer. Here, an oxidation reaction refers to a side reaction that occurs in addition to a normal charge reaction in which lithium and electrons are extracted from a positive electrode active material included in a positive electrode material. In the side reaction, electrons are also extracted from a solid electrolyte containing anions in contact with the positive electrode active material. It is conceivable that, with this oxidation reaction, an oxidative decomposition layer having poor lithium-ion conductivity is formed between the positive electrode active material and the solid electrolyte, and the oxidative decomposition layer functions as a large interfacial resistance in an electrode reaction of the positive electrode.

Patent Literature 1 discloses a positive electrode material including a positive electrode active material and a halide solid electrolyte containing chlorine or bromine. To suppress the above-described generation of an oxidative decomposition layer, the surface of the positive electrode active material disclosed in Patent Literature 1 is coated with a coating material, for example, an oxide solid electrolyte such as lithium niobate. Patent Literature 1 discloses that interposing the coating material between the positive electrode active material and the halide solid electrolyte suppresses occurrence of an oxidative decomposition reaction between the positive electrode active material and the halide solid electrolyte, thereby suppressing formation of an oxidative decomposition layer. However, even in the case where a positive electrode active material is coated with a coating material such as an oxide solid electrolyte in this manner, it is difficult to sufficiently suppress an oxidative decomposition reaction between the positive electrode active material and a halide solid electrolyte containing chlorine or bromine. Therefore, even the positive electrode material disclosed in Patent Literature 1 cannot sufficiently suppress formation of an oxidative decomposition layer between the positive electrode active material and the solid electrolyte.

Furthermore, Patent Literature 2 discloses that, to suppress generation of a high-resistance layer due to a contact between a sulfide solid electrolyte and a positive electrode active material exhibiting a redox reaction at a potential of 3 V or more, the surface of the positive electrode active material is coated with lithium-ion conductive oxide having no electronic conductivity. However, even in the case where the surface of a positive electrode active material is coated with a lithium-ion conductive oxide having no electronic conductivity, it is difficult to sufficiently suppress generation of a high-resistance layer between the positive electrode active material and a solid electrolyte. Therefore, similarly to the positive electrode material including a halide solid electrolyte containing chlorine or bromine, the positive electrode material including a sulfide solid electrolyte also has the problem on generation of a high-resistance layer between the positive electrode active material and the solid electrolyte.

To suppress oxidative decomposition of a solid electrolyte to suppress generation of a high-resistance layer between a positive electrode active material and the solid electrolyte, it is necessary to select a solid electrolyte having excellent oxidation resistance. On the other hand, to improve the output characteristics of the battery, it is necessary to select a solid electrolyte having a high ionic conductivity. In a battery formed using a single solid electrolyte, it has been difficult to simultaneously suppress generation of a high-resistance layer and improve the output characteristics of the battery.

As a result of intensive studies for suppressing generation of a high-resistance layer between a positive electrode active material and a solid electrolyte, the present inventors have found that in the case where a coating layer coating at least partially a surface of a positive electrode active material contains lithium (i.e., Li), zirconium (i.e., Zr), and fluorine (i.e., F), an oxidation reaction of a solid electrolyte can be suppressed, thereby sufficiently suppressing generation of a high-resistance layer between the positive electrode active material and the solid electrolyte. Although the details of the mechanism have not yet been elucidated, the following reason is conceivable; in the case where the coating layer contains fluorine having a high electronegativity as anions, fluorine is strongly bonded to cations formed of a metal element or a metalloid element, and thus an oxidation reaction of fluorine, that is, a side reaction in which electrons are extracted from fluorine, is less likely to proceed.

The present inventors have further found that a material containing lithium and zirconium as cations and containing fluorine as anions has a higher ionic conductivity than a solid electrolyte such as lithium fluoride (i.e., LiF), which consists of lithium and fluorine. Therefore, a battery formed using a positive electrode active material having a surface on which a coating layer containing lithium, zirconium, and fluorine is provided can have further excellent output characteristics.

Furthermore, for example, in the case of a battery formed using, as a solid electrolyte, a material having a high ionic conductivity but having a problem on oxidation resistance, the surface of a positive electrode active material is coated with a material containing lithium, zirconium, and fluorine described above and having an excellent oxidation resistance, so that a direct contact between the positive electrode active material and the above solid electrolyte can be suppressed. Moreover, the material containing lithium, zirconium, and fluorine has a high electron resistance, and accordingly can suppress a direct electron transfer between the positive electrode active material and the solid electrolyte. With the above structure, generation of a high-resistance layer between the positive electrode active material and the solid electrolyte can be suppressed, and a solid electrolyte having a problem on oxidation resistance but having a high ionic conductivity can be used as the positive electrode material, so that the output characteristics of the battery can be improved.

### (Overview of One Aspect according to the Present Disclosure)

A coated positive electrode active material according to a first aspect of the present disclosure includes
a positive electrode active material; and
a coating layer coating at least partially a surface of the positive electrode active material, wherein
the coating layer includes Li, Zr, and F.

In the coated positive electrode active material according to the first aspect, generation of a high-resistance layer between the positive electrode active material and the solid electrolyte can be suppressed.

In a second aspect of the present disclosure, for example, in the coated positive electrode active material according to the first aspect, a material of the coating layer may be represented by the following composition formula (1),

Li_{α}Zr_{β}F_{γ} ... Formula (1)

where the symbols α, β, and γ satisfy 0 < α < 8, 0 < β ≤ 1.1, and 0 < γ ≤ 8.

The coated positive electrode active material according to the second aspect can improve the output characteristics of the battery.

In a third aspect of the present disclosure, for example, in the coated positive electrode active material according to the second aspect, the symbols α, β, and γ may satisfy 0.35 ≤ α ≤ 4, 1 ≤ β ≤ 1.1, and 4.75 ≤ γ ≤ 8.

The coated positive electrode active material according to the third aspect can further improve the output characteristics of the battery.

In a fourth aspect of the present disclosure, for example, in the coated positive electrode active material according to the third aspect, the symbols α, β, and γ may satisfy 3.6 ≤ α ≤ 4, 1 ≤ β ≤ 1.1, and γ = 8.

The coated positive electrode active material according to the fourth aspect can further improve the output characteristics of the battery.

In a fifth aspect of the present disclosure, for example, in the coated positive electrode active material according to the third aspect, the symbols α, β, and γ may satisfy 1.6 ≤ α ≤ 2, 1 ≤ β ≤ 1.1, and γ = 6.

The coated positive electrode active material according to the fifth aspect can further improve the output characteristics of the battery.

In a sixth aspect of the present disclosure, for example, in the coated positive electrode active material according to any one of the first to fifth aspects, a ratio of a mass of the coating layer to a mass of the positive electrode active material may be 3/100 or more and 15/100 or less.

In the coated positive electrode active material according to the sixth aspect, generation of a high-resistance layer between the positive electrode active material and the solid electrolyte can be suppressed effectively.

In a seventh aspect of the present disclosure, for example, in the coated positive electrode active material according to the sixth aspect, the ratio of the mass of the coating layer to the mass of the positive electrode active material may be 7/100 or more and 10/100 or less.

In the coated positive electrode active material according to the seventh aspect, generation of a high-resistance layer between the positive electrode active material and the solid electrolyte can be suppressed more effectively.

In an eighth aspect of the present disclosure, for example, in the coated positive electrode active material according to any one of the first to seventh aspects, an average thickness of the coating layer may be 1 nm or more and 300 nm or less.

In the coated positive electrode active material according to the eighth aspect, generation of a high-resistance layer between the positive electrode active material and the solid electrolyte can be suppressed effectively.

In a ninth aspect of the present disclosure, for example, in the coated positive electrode active material according to the eighth aspect, the average thickness of the coating layer may be 2 nm or more and 200 nm or less.

In the coated positive electrode active material according to the ninth aspect, generation of a high-resistance layer between the positive electrode active material and the solid electrolyte can be suppressed effectively.

In a tenth aspect of the present disclosure, for example, in the coated positive electrode active material according to any one of the first to ninth aspects, the positive electrode active material may include lithium nickel cobalt manganese oxide.

The coated positive electrode active material according to the tenth aspect can increase the energy density of the battery.

A positive electrode material according to an eleventh aspect of the present disclosure includes,
the coated positive electrode active material according to any one of the first to tenth aspects; and
a first solid electrolyte.

In the positive electrode material according to the eleventh aspect, generation of a high-resistance layer between the positive electrode active material and the first solid electrolyte can be suppressed.

In a twelfth aspect of the present disclosure, for example, in the positive electrode material according to the eleventh aspect, the first solid electrolyte may include a halide solid electrolyte.

The positive electrode material according to the twelfth aspect can improve the output characteristics of the battery.

In a thirteenth aspect of the present disclosure, for example, in the positive electrode material according to the eleventh or twelfth aspect, the first solid electrolyte may include a sulfide solid electrolyte.

The positive electrode material according to the thirteenth aspect can improve the output characteristics of the battery.

A battery according to a fourteenth aspect of the present disclosure includes:
a positive electrode including the positive electrode material according to any one of the eleventh to thirteenth aspects;
a negative electrode; and
an electrolyte layer provided between the positive electrode and the negative electrode.

In the battery according to the fourteenth aspect, generation of a high-resistance layer between the positive electrode active material and the first solid electrolyte can be suppressed.

In a fifteenth aspect of the present disclosure, for example, in the battery according to the fourteenth aspect, the electrolyte layer may include a second solid electrolyte, and the second solid electrolyte may include a solid electrolyte having a composition that is the same as a composition of a solid electrolyte included in the first solid electrolyte.

The battery according to the fifteenth aspect can have improved output characteristics.

In a sixteenth aspect of the present disclosure, for example, in the battery according to the fourteenth aspect, the electrolyte layer may include a second solid electrolyte, and the second solid electrolyte may include a halide solid electrolyte having a composition that is different from a composition of a solid electrolyte included in the first solid electrolyte.

The battery according to the sixteenth aspect can have improved output characteristics.

In a seventeenth aspect of the present disclosure, for example, in the battery according to the fourteenth aspect, the electrolyte layer may include a second solid electrolyte, and the second solid electrolyte may include a sulfide solid electrolyte.

The battery according to the seventeenth aspect can have improved output characteristics.

A manufacturing method for manufacturing a coated positive electrode active material according to an eighteenth aspect of the present disclosure is a manufacturing method for manufacturing the coated positive electrode active material according to the first aspect, the manufacturing method including
performing processing on the positive electrode active material and a material of the coating layer by a dry particle composing method, wherein
the dry particle composing method includes imparting a mechanical energy generated by impact, compression, and shear to the positive electrode active material and the material of the coating layer.

With the manufacturing method according to the eighteenth aspect, it is possible to manufacture a coated positive electrode active material in which generation of a high-resistance layer between a positive electrode active material and a solid electrolyte can be suppressed.

In a nineteenth aspect of the present disclosure, for example, in the manufacturing method according to the eighteenth aspect, a ratio of an average particle diameter Da of the positive electrode active material to an average particle diameter Dc of the material of the coating layer, Da/Dc, may be 2 or more.

With the manufacturing method according to the nineteenth aspect, it is possible to manufacture a coated positive electrode active material in which generation of a high-resistance layer between a positive electrode active material and a solid electrolyte can be suppressed effectively.

In a twentieth aspect of the present disclosure, for example, in the manufacturing method according to the nineteenth aspect, the ratio of the average particle diameter Da of the positive electrode active material to the average particle diameter Dc of the material of the coating layer, Da/Dc, may be 5 or more.

With the manufacturing method according to the twentieth aspect, it is possible to manufacture a coated positive electrode active material in which generation of a high-resistance layer between a positive electrode active material and a solid electrolyte can be suppressed more effectively.

### (Embodiment 1)

### (Coated Positive Electrode Active Material)

A coated positive electrode active material according to Embodiment 1 includes a positive electrode active material and a coating layer coating at least partially a surface of the positive electrode active material. The coating layer contains lithium (i.e., Li), zirconium (i.e., Zr), and fluorine (i.e., F). That is, the coating layer is formed of a material containing Li, Zr, and F. Hereinafter, the material of the coating layer is referred to as "coating material". In other words, the coated positive electrode active material according to Embodiment 1 includes the positive electrode active material and the coating material, and the coating material is positioned on at least a portion of the surface of the positive electrode active material to form the coating layer.

In the coated positive electrode active material according to Embodiment 1 with the above structure, generation of a high-resistance layer between the positive electrode active material and a solid electrolyte can be suppressed.

The coating material according to Embodiment 1 may be represented by the following composition formula (1).

Li_{α}Zr_{β}F_{γ} ... Formula (1)

Here, α, β, and γ satisfy 0 < α <8, 0 < β ≤ 1.1, and 0 < γ ≤ 8.

Owing to the coating material represented by the composition formula (1), the ionic conductivity of the coating material further improves. This allows the coated positive electrode active material according to Embodiment 1 to improve the output characteristics of the battery.

Additionally, in the composition formula (1), 0.35 ≤ α ≤ 4, 1 ≤ β ≤ 1.1, and 4.75 ≤ γ ≤ 8 may be satisfied.

With the above structure, the ionic conductivity of the coating material can be further improved. This allows the coated positive electrode active material according to Embodiment 1 to further improve the output characteristics of the battery.

Additionally, in the composition formula (1), 3.6 ≤ α ≤ 4, 1 ≤ β ≤ 1.1, and γ = 8 may be satisfied.

With the above structure, the ionic conductivity of the coating material can be further improved. This allows the coated positive electrode active material according to Embodiment 1 to further improve the output characteristics of the battery.

Furthermore, in the composition formula (1), 1.6 ≤ α ≤ 2, 1 ≤ β ≤ 1.1, and γ = 6 may be satisfied.

With the above structure, the ionic conductivity of the coating material can be further improved. This allows the coated positive electrode active material according to Embodiment 1 to further improve the output characteristics of the battery.

Additionally, the coating material may be a material represented by the following composition formula (A1).

Li_{8-4d}Zr_{d}F₈ ... Formula (A1)

Here, in the composition formula (A1), d satisfies 0 < d <1.

With the above structure, the ionic conductivity of the coating material can be further improved. This allows the coated positive electrode active material according to Embodiment 1 to further improve the output characteristics of the battery.

Additionally, the coating material may be a material represented by the following composition formula (A2).

Li₄ZrF₈ ... Formula (A2)

With the above structure, the ionic conductivity of the coating material can be further improved. This allows the coated positive electrode active material according to Embodiment 1 to further improve the output characteristics of the battery.

Additionally, the coating material may be a material represented by the following composition formula (A3).

Li_{4-4δ}Zr_{1+δ}P₈ ... Formula (A3)

Here, in the composition formula (A3), 0 < δ ≤ 0.1 is satisfied.

With the above structure, the ionic conductivity of the coating material can be further improved. This allows the coated positive electrode active material according to Embodiment 1 to further improve the output characteristics of the battery.

The coating material may be a material represented by the following composition formula (B1).

Li_{6-4d}Zr_{d}F₆ ... Formula (B1)

Here, in the composition formula (B1), 0 < d <1 is satisfied.

With the above structure, the ionic conductivity of the coating material can be further improved. This allows the coated positive electrode active material according to Embodiment 1 to further improve the output characteristics of the battery.

Additionally, the coating material may be a material represented by the following composition formula (B2).

Li₂ZrF₆ ... Formula (B2)

With the above structure, the ionic conductivity of the coating material can be further improved. This allows the coated positive electrode active material according to Embodiment 1 to further improve the output characteristics of the battery.

Additionally, the coating material may be a material represented by the following composition formula (B3).

Li_{2-4δ}Zr_{1+δ}P₆ ... Formula (B3)

Here, in the composition formula (B3), 0 <δ ≤ 0.1 is satisfied.

With the above structure, the ionic conductivity of the coating material can be further improved. This allows the coated positive electrode active material according to Embodiment 1 to further improve the output characteristics of the battery.

The "coating material" in the present disclosure is not limited to those strictly satisfying the above composition formulae, and also includes those containing a trace amount of impurities in addition to the constituent elements represented by the composition formulae. For example, the coating material may contain 10 mass% or less of impurities in addition to the constituent element represented by the composition formula. Additionally, the coating material may be free of sulfur.

The ratio of the mass of the coating layer to the mass of the positive electrode active material may be 3/100 or more and 15/100 or less. In the case where the mass ratio of the coating layer is 3/100 or more, the ratio of the coating material coating the surface of the positive electrode active material is sufficiently high. Accordingly, generation of a high-resistance layer can be suppressed effectively by the coating layer. Furthermore, in the case where the mass ratio of the coating layer is 15/100 or less, the coating material coating the surface of the positive electrode active material does not hinder electron transfer between the positive electrode active materials. Accordingly, the output characteristics of the battery can be improved.

In the coated positive electrode active material according to Embodiment 1 with the above structure, generation of a high-resistance layer between the positive electrode active material and the solid electrolyte can be suppressed effectively.

The ratio of the mass of the coating layer to the mass of the positive electrode active material may be 7/100 or more and 10/100 or less. In the case where the mass ratio of the coating layer is 7/100 or more, the ratio of the coating material coating the surface of the positive electrode active material is sufficiently high. Accordingly, generation of a high-resistance layer can be suppressed effectively by the coating layer. Furthermore, in the case where the mass ratio of the coating layer is 10/100 or less, the coating material coating the surface of the positive electrode active material does not hinder electron transfer between the positive electrode active materials. Accordingly, the output characteristics of the battery can be improved.

In the coated positive electrode active material according to Embodiment 1 with the above structure, generation of a high-resistance layer between the positive electrode active material and the solid electrolyte can be suppressed effectively.

The average thickness of the coating layer may be, for example, 1 nm or more and 300 nm or less. In the case where the coating layer has an average thickness of 1 nm or more, the ratio of the coating material coating the surface of the positive electrode active material is sufficiently high. Accordingly, generation of a high-resistance layer can be suppressed effectively by the coating layer. In the case where the coating layer has an average thickness of 300 nm or less, the coating material coating the surface of the positive electrode active material does not hinder electron transfer between the positive electrode active materials. Accordingly, the output characteristics of the battery can be improved. The average thickness of the coating layer can be obtained, for example, by measuring the thickness of the coating layer at random 16 points in a cross-sectional SEM image obtained with a scanning electron microscope (SEM) of the coated positive electrode active material and calculating the average value from the measured values. The average film thickness of the coating layer may be 2 nm or more and 200 nm or less.

In the coated positive electrode active material according to Embodiment 1 with the above structure, generation of a high-resistance layer between the positive electrode active material and the solid electrolyte can be suppressed effectively.

### (Method for Manufacturing Coating Material)

The coating material according to Embodiment 1 can be manufactured, for example, by the following method.

Raw material powders in a blending ratio to obtain a desired composition are prepared. For example, to produce Li₄ZrF₈, LiF and ZrF₄ are prepared in a molar ratio of 4: 1. Furthermore, the above-described values "α", "β", "γ", "d", and "δ" can be adjusted by adjusting the raw materials, the blending ratio, and the synthesis process.

The raw material powders are well mixed, and then mixed, pulverized, and reacted together by a mechanochemical milling method. Alternatively, the raw material powders may be well mixed, and then fired in a vacuum or in an inert atmosphere. The firing conditions may be, for example, firing within a range of 100°C to 650°C for 1 hour or more. Thus, a coating material having a composition as described above can be obtained.

Additionally, the structure of the crystal phase (crystal structure) in the coating material can be determined by adjusting the reaction method and the reaction conditions of the raw material powders.

### (Positive Electrode Active Material)

The positive electrode active material is, for example, a material having properties of occluding and releasing metal ions (e.g., lithium ions). Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂. In the case where a lithium-containing transition metal oxide is, for example, used as the positive electrode active material, it is possible to reduce the manufacturing cost of the positive electrode and increase the average discharge voltage.

To increase the energy density of the battery, the positive electrode active material may be lithium nickel cobalt manganese oxide. For example, the positive electrode active material may be Li(Ni, Co, Mn)O₂.

The positive electrode active material according to Embodiment 1 may be a positive electrode active material having a surface on which a coating film containing, for example, a lithium metal oxide. In other words, a coating film formed of, for example, a lithium metal oxide may be provided between the positive electrode active material and the coating layer. Examples which can be used as the lithium metal oxide include LiNbO₃ (lithium niobate). By providing a coating film containing, for example, a lithium metal oxide such as LiNbO₃ on the surface of the positive electrode active material, a side reaction between the positive electrode active material and the coating layer is suppressed during charge. Therefore, in the coated positive electrode active material according to Embodiment 1 with this structure, generation of a high-resistance layer on the surface of the positive electrode active material can be suppressed effectively.

### (Method for Manufacturing Coated Positive Electrode Active Material)

A method for manufacturing a coated positive electrode active material according to Embodiment 1 includes, for example, performing processing on a positive electrode active material and a material of a coating layer (i.e., coating material) by a dry particle composing method. The dry particle composing method includes imparting a mechanical energy generated by impact, compression, and shear to the positive electrode active material and the coating material. The positive electrode active material and the coating material are mixed in an appropriate blending ratio.

An apparatus that can be used in the method for manufacturing a coated positive electrode active material is not particularly limited as long as the apparatus can impart a mechanical energy generated by impact, compression, shear, etc. to the mixture. Examples of the apparatus include a ball mill and a compression shear type processing apparatus (particle composing machine) such as "MECHANO FUSION" (manufactured by Hosokawa Micron Corporation) and "NOBILTA" (manufactured by Hosokawa Micron Corporation). Among these, "MECHANO FUSION" and "NOBILTA" are more preferred, and "NOBILTA" is even more preferred.

"MECHANO FUSION" is a particle composing machine using a dry mechanical composing technology in which a high mechanical energy is applied to a plurality of different material particles. In MECHANO FUSION, a mechanical energy generated by compression, shear, friction, etc. is imparted to powder raw materials charged between a rotating vessel and a press head, so that particles composing is caused.

"NOBILTA" is a particle composing machine using a dry mechanical composing technology developed from a particle composing technology in order to perform composing using nanoparticles as a raw material. NOBILTA manufactures composite particles by imparting a mechanical energy generated by impact, compression, and shear to a plurality of raw material powders.

In "NOBILTA", inside a horizontal cylindrical mixing vessel, a rotor is disposed so as to have a predetermined gap between the rotor and the inner wall of the mixing vessel, and the rotor rotates at a high speed to repeat processing of forcibly passing raw material powders through the gap a plurality of times. This exerts the force of impact, compression, and shear on the mixture, and thus composite particles of the positive electrode active material and the coating material can be produced. Conditions such as the rotation speed of the rotor, the processing time, and the charge amount can be appropriately adjusted.

The ratio of the average particle diameter Da of the positive electrode active material to the average particle diameter Dc of the coating material used in the method for manufacturing a coated positive electrode active material, Da/Dc, may be 2 or more. The ratio Da/Dc being 2 or more facilitates the surface of the positive electrode active material to be coated densely with the coating material. Accordingly, it is possible to manufacture a coated positive electrode active material in which an oxidation reaction between a positive electrode active material and a solid electrolyte can be suppressed effectively. Therefore, with the method for manufacturing a coated positive electrode active material according to Embodiment 1, it is possible to manufacture a coated positive electrode active material in which generation of a high-resistance layer between a positive electrode active material and a solid electrolyte can be suppressed efficiently.

The ratio of the average particle diameter Da of the positive electrode active material to the average particle diameter Dc of the coating material used in the method for manufacturing a coated positive electrode active material, Da/Dc, may be 5 or more. The ratio Da/Dc being 5 or more facilitates the surface of the positive electrode active material to be coated more densely with the coating material. Accordingly, it is possible to manufacture a coated positive electrode active material in which an oxidation reaction between a positive electrode active material and a solid electrolyte can be suppressed more effectively. Therefore, in the case where the ratio Da/Dc is 5 or more, the method for manufacturing a coated positive electrode active material according to Embodiment 1 allows to manufacture a coated positive electrode active material in which generation of a high-resistance layer between a positive electrode active material and a solid electrolyte can be suppressed efficiently.

The average particle diameters of the positive electrode active material and the coating material can be measured by, for example, using an SEM image. Specifically, an SEM image is used to calculate the average value of circle-equivalent diameters of randomly selected 50 positive electrode active material particles and the average value of circle-equivalent diameters of randomly selected 50 coating material particles to obtain the average particle diameters of the positive electrode active material and the coating material.

### (Positive Electrode Material)

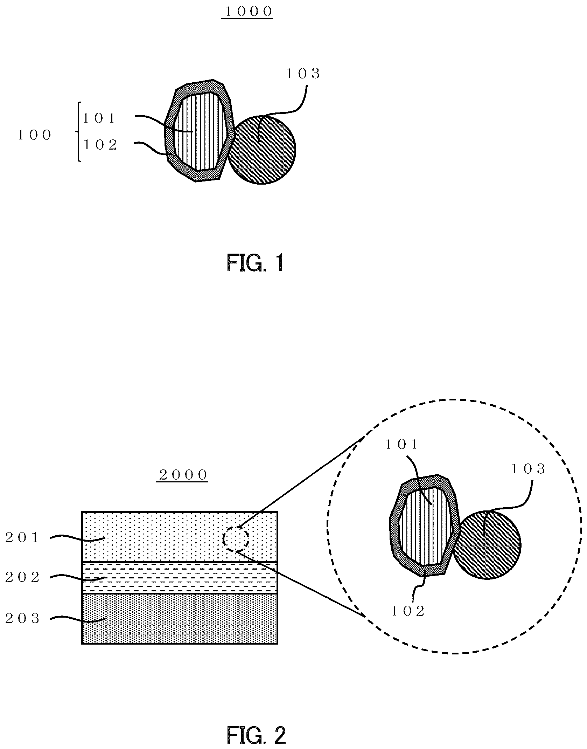

FIG. 1 is a cross-sectional view showing the schematic structure of a positive electrode material according to Embodiment 1.

The positive electrode material 1000 according to Embodiment 1 includes the coated positive electrode active material 100 according to Embodiment 1 described above and a first solid electrolyte 103. The coated positive electrode active material 100 includes a positive electrode active material 101 and a coating layer 102 coating at least partially the surface of the positive electrode active material 101.

The first solid electrolyte 103 includes, for example, a solid electrolyte having a high ionic conductivity.

The first solid electrolyte 103 may include a halide solid electrolyte. Examples which can be used as the halide solid electrolyte include Li₃(Ca, Y, Gd)X₆, Li₂MgX₄, Li₂FeX₄, Li(AI, Ga, In)X₄, Li₃(Al, Ga, In)X₆, and Lil. Here, in these solid electrolytes, the element X is at least one selected from the group consisting of CI, Br, and I. Note that, in the present disclosure, when an element in a formula is expressed such as "(Al, Ga, In)", this expression indicates at least one element selected from the group of elements in parentheses. In other words, the expression "(Al, Ga, In)" is synonymous with the expression "at least one selected from the group consisting of Al, Ga, and In". The same applies to other elements.

The first solid electrolyte 103 may include a sulfide solid electrolyte. Examples which can be used as the sulfide solid electrolyte include Li₂S-P₂S₅, Li₂S-SiS₂, Li₂S-B₂S₃Li₂S-GeS₂, Li_{3.25}Ge_{0.25}P_{0.75}S₄, and Li₁₀GeP₂S₁₂. Furthermore, LiX, Li₂O, MO_{q}, and/or LiₚMO_{q}, etc. may be added to these. Here, the element X in "LiX" is one or two or more elements selected from the group consisting of F, CI, Br, and I. Moreover, the element M in "MO_{q}" and "LiₚMO_{q}" is one or two or more elements selected from the group consisting of P, Si, Ge, B, Al, Ga, In, Fe, and Zn. Furthermore, p and q in "MO_{q}" and "LiₚMO_{q}" are each an independent natural number.

Additionally, the first solid electrolyte 103 may be a sulfide solid electrolyte. For example, the sulfide solid electrolyte may contain lithium sulfide and phosphorus sulfide. For example, the sulfide solid electrolyte may be Li₂S-P₂S₅.

Furthermore, the shape of the first solid electrolyte 103 is not particularly limited, and may be, for example, acicular, spherical, or ellipsoidal. For example, the shape of the first solid electrolyte 103 may be particulate.

For example, in the case where the shape of the first solid electrolyte 103 is particulate (e.g., spherical), the median diameter of the first solid electrolyte 103 may be 100 µm or less. In the case where the median diameter of the first solid electrolyte 103 is 100 µm or less, the coated positive electrode active material 100 and the first solid electrolyte 103 can form a favorable dispersion state in the positive electrode material 1000. This improves the charge and discharge characteristics of a battery formed using the positive electrode material 1000.

The median diameter of the first solid electrolyte 103 may be 10 µm or less. With this structure, the coated positive electrode active material 100 and the first solid electrolyte 103 can form a more favorable dispersion state in the positive electrode material 1000.

The median diameter of the first solid electrolyte 103 may be smaller than the median diameter of the coated positive electrode active material 100. With this structure, the coated positive electrode active material 100 and the first solid electrolyte 103 can form a more favorable dispersion state in the positive electrode material 1000.

The median diameter of the coated positive electrode active material 100 may be 0.1 µm or more and 100 µm or less.

In the case where the median diameter of the coated positive electrode active material 100 is 0.1 µm or more, the coated positive electrode active material 100 and the first solid electrolyte 103 can form a favorable dispersion state in the positive electrode material 1000. This improves the charge and discharge characteristics of a battery formed using the positive electrode material 1000. Furthermore, in the case where the median diameter of the coated positive electrode active material 100 is 100 µm or less, the diffusion rate of lithium in the coated positive electrode active material 100 improves. This allows a battery formed using the positive electrode material 1000 to operate at a high power.

The median diameter means the particle diameter at a cumulative volume equal to 50% in the volumetric particle size distribution. The volumetric particle size distribution is measured, for example, by a laser diffraction measurement device or an image analysis device.

Additionally, in the positive electrode material 1000 according to Embodiment 1, the first solid electrolyte 103 and the coating layer 102 may be in contact with each other as shown in FIG. 1. At this time, the coating layer 102 and the positive electrode active material 101 are in contact with each other.

Furthermore, the positive electrode material 1000 according to Embodiment 1 may include a plurality of first solid electrolytes 103 and a plurality of coated positive electrode active materials 100.

Moreover, the content of the first solid electrolyte 103 and the content of the coated positive electrode active material 100 in the positive electrode material 1000 according to Embodiment 1 may be the same, or may be different from each other.

### (Embodiment 2)

Embodiment 2 will be described below. The description overlapping that in Embodiment 1 above will be omitted as appropriate.

FIG. 2 is a cross-sectional view showing the schematic structure of a battery according to Embodiment 2.

The battery 2000 according to Embodiment 2 includes a positive electrode 201 including the positive electrode material 1000 described in Embodiment 1 above, an electrolyte layer 202, and a negative electrode 203.

The positive electrode 201 includes a material having properties of occluding and releasing metal ions (e.g., lithium ions). The positive electrode 201 includes the coated positive electrode active material 100 and the first solid electrolyte 103.

When the volume ratio of the positive electrode active material 101 and the sum of the coating layer 102 and the first solid electrolyte 103, included in the positive electrode 201, is defined as "v1: 100 - v1", 30 ≤ v1 ≤ 95 may be satisfied. Here, v1 represents, when the total volume of the positive electrode active material 101, the coating layer 102, and the first solid electrolyte 103 included in the positive electrode 201 is defined as 100, the volume fraction of the positive electrode active material 101. In the case where 30 ≤ v1 is satisfied, a sufficient energy density of the battery 2000 is easily achieved. In the case where v1 ≤ 95 is satisfied, an operation of the battery 2000 at a high power is more easily achieved.

The thickness of the positive electrode 201 may be 10 µm or more and 500 µm or less. Additionally, in the case where the thickness of the positive electrode 201 is 10 µm or more, a sufficient energy density of the battery 2000 can be achieved. Furthermore, in the case where the thickness of the positive electrode 201 is 500 µm or less, an operation of the battery 2000 at a high power can be achieved.

The electrolyte layer 202 is disposed between the positive electrode 201 and the negative electrode 203.

The electrolyte layer 202 is a layer including an electrolyte material. The electrolyte material may include, for example, a second solid electrolyte material. In other words, the electrolyte layer 202 may be a solid electrolyte layer.

As the second solid electrolyte included in the electrolyte layer 202, a halide solid electrolyte, a sulfide solid electrolyte, an oxide solid electrolyte, a polymer solid electrolyte, or a complex hydride solid electrolyte may be used.

The second solid electrolyte may include a solid electrolyte having the composition that is the same as the composition of the solid electrolyte included in the first solid electrolyte.

For example, in the case where the second solid electrolyte includes a halide solid electrolyte, the second solid electrolyte may include a halide solid electrolyte having the composition that is the same as the composition of the halide solid electrolyte included in the first solid electrolyte according to Embodiment 1. In other words, the electrolyte layer 202 may include a halide solid electrolyte having the composition that is the same as the composition of the halide solid electrolyte included in the first solid electrolyte according to Embodiment 1 described above.

With the above structure, the output characteristics of the battery 2000 can be further improved.

Furthermore, the second solid electrolyte included in the electrolyte layer 202 may include a halide solid electrolyte having the composition that is different from the composition of the halide solid electrolyte included in the first solid electrolyte according to Embodiment 1. In other words, the electrolyte layer 202 may include a halide solid electrolyte having the composition that is different from the composition of the halide solid electrolyte included in the first solid electrolyte according to Embodiment 1 described above.

With the above structure, the output characteristics of the battery 2000 can be further improved.

The second solid electrolyte included in the electrolyte layer 202 may include a sulfide solid electrolyte. The second solid electrolyte may include a sulfide solid electrolyte having the composition that is the same as the composition of the sulfide solid electrolyte included in the first solid electrolyte according to Embodiment 1. In other words, the electrolyte layer 202 may include a sulfide solid electrolyte having the composition that is the same as the composition of the sulfide solid electrolyte included in the first solid electrolyte according to Embodiment 1 described above.

With the above structure, since the electrolyte layer 202 includes a sulfide solid electrolyte having excellent reduction stability, a low-potential negative electrode material such as graphite or metal lithium can be used as the negative electrode 203. This allows the energy density of the battery 2000 to improve. Furthermore, with the structure in which the electrolyte layer 202 includes the same sulfide solid electrolyte as the sulfide solid electrolyte included in the first solid electrolyte according to Embodiment 1, the output characteristics of the battery 2000 can be further improved.

The second solid electrolyte included in the electrolyte layer 202 may include an oxide solid electrolyte. Examples of the oxide solid electrolyte included in the electrolyte layer 202 include: a NASICON solid electrolyte material typified by LiTi₂(PO₄)₃ and element-substituted substances thereof; a (LaLi)TiO₃-based perovskite solid electrolyte material; a LISICON solid electrolyte material typified by Li₁₄ZnGe₄O₁₆, Li₄SiO₄, and LiGeO₄ and element-substituted substances thereof; a garnet solid electrolyte material typified by Li₇La₃Zr₂O₁₂ and element-substituted substances thereof; Li₃PO₄ and N-substituted substances thereof; glass to which Li₂SO₄, Li₂CO₃, or the like has been added using a Li-B-O compound such as LiBO₂ or Li₃BO₃ as the base thereof; and glass ceramics.

The second solid electrolyte included in the electrolyte layer 202 may include a polymer solid electrolyte. Examples which can be used as the polymer solid electrolyte included in the electrolyte layer 202 include a compound of a polymer compound and a lithium salt. The polymer compound may have an ethylene oxide structure. A polymer compound having an ethylene oxide structure can contain a large amount of lithium salt. This can further increase the ionic conductivity. Examples which can be used as the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. The lithium salts may be used alone, or two or more thereof may be used in combination.

The second solid electrolyte included in the electrolyte layer 202 may include a complex hydride solid electrolyte. Examples which can be used as the complex hydride solid electrolyte included in the electrolyte layer 202 include LiBH₄-LiI and LiBH₄-P₂S₅.

Additionally the electrolyte layer 202 may include the above-described second solid electrolyte as a main component. In other words, the electrolyte layer 202 may include the second solid electrolyte, for example, at a mass proportion of 50% or more (i.e., 50 mass% or more) with respect to the entire electrolyte layer 202.

With the above structure, the output characteristics of the battery 2000 can be further improved.

Furthermore, the electrolyte layer 202 may include the second solid electrolyte, for example, at a mass proportion of 70% or more (i.e., 70 mass% or more) with respect to the entire electrolyte layer 202.

With the above structure, the output characteristics of the battery 2000 can be further improved.

Additionally, while including the second solid electrolyte as a main component, the electrolyte layer 202 may further include inevitable impurities, or a starting material used for synthesis of the second solid electrolyte, a by-product, a decomposition product, etc.

Furthermore, the electrolyte layer 202 may include the second solid electrolyte, for example, at a mass proportion of 100% (i.e., 100 weight%) with respect to the entire electrolyte layer 202, except for inevitably incorporated impurities.

With the structure above, the output characteristics of the battery 2000 can be further improved.

As described above, the electrolyte layer 202 may consist of the second solid electrolyte.

Additionally, the electrolyte layer may include two or more of the materials exemplified as the solid electrolyte material. For example, the electrolyte layer may include a halide solid electrolyte and a sulfide solid electrolyte.

The thickness of the electrolyte layer 202 may be 1 µm or more and 300 µm or less. In the case where the thickness of the electrolyte layer 202 is 1 µm or more, a possibility of a short-circuit between the positive electrode 201 and the negative electrode 203 is reduced. Furthermore, in the case where the thickness of the electrolyte layer 202 is 300 µm or less, an operation at a high power is easily achieved. In other words, an appropriate adjustment of the thickness of the electrolyte layer 202 allows to achieve a sufficient safety of the battery 2000 and to operate the battery 2000 at a high power.

The negative electrode 203 includes a material having properties of occluding and releasing metal ions (e.g., lithium ions). The negative electrode 203 includes, for example, a negative electrode active material (e.g., negative electrode active material particles).

Examples which can be used as the negative electrode active material include a metal material, a carbon material, an oxide, a nitride, a tin compound, and a silicon compound. The metal material may be an elemental metal. Alternatively, the metal material may be an alloy. Examples of the metal material include lithium metal and a lithium alloy. Examples of the carbon material include a natural graphite, a coke, a semi-graphitized carbon, a carbon fiber, a spherical carbon, an artificial graphite, and an amorphous carbon. From the viewpoint of capacity density, silicon, tin, a silicon compound, or a tin compound can be suitably used.

The negative electrode 203 may include a third solid electrolyte. With the above structure, the lithium-ion conductivity inside the negative electrode can be increased, thereby achieving an operation at a high power. As the third solid electrolyte included in the negative electrode 203, the materials exemplified as the second solid electrolyte included in the electrolyte layer 202 can be used.

The median diameter of the negative electrode active material particles may be larger than the median diameter of the third solid electrolyte included in the negative electrode 203. With this, it is possible to form a favorable dispersion state of the negative electrode active material and the third solid electrolyte.

With respect to the volume ratio "v2: 100 - v2" of the negative electrode active material and the third solid electrolyte included in the negative electrode 203, 30 ≤ v2 ≤ 95 may be satisfied. Here, v2 represents, when the total volume of the negative electrode active material and the third solid electrolyte included in the negative electrode 203 is defined as 100, the volume ratio of the negative electrode active material. In the case where 30 ≤ v2 is satisfied, a sufficient energy density of the battery 2000 is easily achieved. In the case where v2 ≤ 95 is satisfied, an operation of the battery 2000 at a high power is more easily achieved.

The thickness of the negative electrode 203 may be 10 µm or more and 500 µm or less. In the case where the thickness of the negative electrode 203 is 10 µm or more, a sufficient energy density of the battery 2000 is easily achieved. In the case where the thickness of the negative electrode 203 is 500 µm or less, an operation of the battery 2000 at a high power is more easily achieved.

To improve the adhesion between particles, at least one selected from the group consisting of the positive electrode 201, the electrolyte layer 202, and the negative electrode 203 may contain a binder. The binder is used to improve the binding properties of the materials of the electrodes. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. Furthermore, as the binder, a copolymer of two or more materials can be used, the materials being selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Moreover, two or more selected from these may be mixed to be used as the binder.

At least one of the positive electrode 201 and the negative electrode 203 may contain a conductive additive to improve the electronic conductivity. Examples of the conductive additive include: graphites such as a natural graphite and an artificial graphite; carbon blacks such as acetylene black and ketjen black; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as a polyaniline compound, a polypyrrole compound, and a polythiophene compound. Using a carbon conductive additive can seek cost reduction.

Additionally, the battery 2000 according to Embodiment 2 can be configured as batteries having various shapes such as a coin type, a cylindrical type, a prismatic type, a sheet type, a button type, a flat type, and a stack type.

The battery 2000 according to Embodiment 2 may be manufactured, for example, by preparing each of the positive electrode material according to Embodiment 1, the material for forming an electrolyte layer, and the material for forming a negative electrode, and producing by a known method a stack in which the positive electrode, the electrolyte layer, and the negative electrode are disposed in this order.

### Examples

Hereinafter, the present disclosure will be described in more detail with reference to examples.

### (Examples 1a to 1f)

### [Production of Coating Material]

In a glove box in an argon atmosphere with a dew point of -60°C or less and an oxygen value of 5 ppm or less, LiF and ZrF₄ as raw material powders were weighed in a molar ratio of LiF: ZrF₄ = 4: 1. These raw material powders were mixed in an agate mortar to obtain a mixture. Next, a milling process was performed at 600 rpm for 12 hours with a planetary ball mill device (Type P-7, manufactured by Fritsch GmbH) to obtain a compound represented by a composition formula Li₄ZrF₈ (hereinafter referred to as LZF). The compound LZF was pulverized in an agate mortar to obtain a powder having an average particle diameter of 5 µm as a coating material. The average particle diameter of the coating material is represented by the median diameter, and was obtained by calculating the average value of circle-equivalent diameters of 50 particles randomly selected from among coating material particles observed with a scanning electron microscope (3D Real Surface View Microscope VE-8800, manufactured by Keyence Corporation) at a magnification of 5000 times.

### [Positive Electrode Active Material]

The positive electrode active material used was Li(Ni, Co, Mn)O₂ (hereinafter referred to as NCM) having an average particle diameter of 5 µm.

### [Production of Coated Positive Electrode Active Material]

Coating of the positive electrode active material with the coating material was performed using a particle composing machine (NOBILTA, NOB-MINI, manufactured by Hosokawa Micron Corporation). In a vessel of NOB-MINI, 50 g of NCM and an LZF powder were put, where the amount of the LZF powder was 1.5 g (Example 1a), 2.0 g (Example 1b), 2.5 g (Example 1c), 3.5 g (Example 1d), 5.0 g (Example 1e), and 7.5 g (Example 1f). A composing process of NCM and LZF was performed at a rotation speed of 5000 to 6000 rpm for an operating time of 15 minutes at a power value of 640 W to produce coated positive electrode active materials of Examples 1a to 1f.

### [Production of Battery]

The following steps were performed using the coated positive electrode active materials of Examples 1a to 1f described above.

In a glove box in an argon atmosphere with a dew point of -60°C or less and an oxygen value of 5 ppm or less, any of the coated positive electrode active materials of Examples 1a to 1f and Li₂S-P₂S₅ as the first solid electrolyte were weighed in the volume ratio of the positive electrode active material: the coating layer and the first solid electrolyte = 60: 40. These were mixed in an agate mortar to produce positive electrode materials of Examples 1a to 1f.

In an insulating outer cylinder, 80 mg of Li₂S-P₂S₅ as the second solid electrolyte was put and pressure-molded at a pressure of 80 MPa to obtain an electrolyte layer. Next, 14 mg of any of the positive electrode materials of Examples 1a to 1f was put in terms of the equivalent of the positive electrode active material, and pressure-molded at a pressure of 720 MPa to obtain a positive electrode layer. Next, metal In (thickness: 200 µm), metal Li (thickness: 300 µm), and metal In (thickness: 200 µm) were stacked in this order on the electrolyte layer on the counter electrode side. This stack was pressure-molded at a pressure of 80 MPa to obtain a negative electrode layer. Next, stainless steel current collectors were disposed on the top and the bottom of the stack, and current collector leads were attached to the current collectors. Finally, an insulating ferrule was used to block the inside of the insulating outer cylinder from the outside air atmosphere and seal the insulating outer cylinder. Thus, a battery was produced. Additionally, the insulating outer cylinder used in the present examples had an inner diameter of 9.5 mm, and the projected area of the electrode was set to 0.71 cm².

### [Battery Evaluation]

Battery evaluation was performed using the batteries of Examples 1a to 1f described above under the following conditions.

The batteries of Examples 1a to 1f were placed in a thermostatic chamber at 25°C.

Constant-current charge was performed at a current value of 140 µA at 0.05 C rate (20-hour rate) with respect to the theoretical capacity of the battery, and the charge was terminated at a voltage of 3.68 V (corresponding to 4.3 V in the Li/Li⁺ reference voltage). Next, constant-voltage charge was performed at a voltage of 3.68 V, and the charge was terminated at a current value of 28 µA or less at 0.01 C rate. After the charge, impedance measurement by an alternating current impedance method was performed to obtain the interfacial resistance value between the coated positive electrode active material and the first solid electrolyte. The conditions for the impedance measurement were set to the voltage amplitude of 5 mV, the measurement frequency of 1 MHz to 0.1 Hz, and 25°C. The results are shown in Table 1. Next, these batteries were statically stored in an open-circuit state for 3 days. Next, discharge was performed at a current value of 140 µA, which was also at 0.05 C rate, and the discharge was terminated at a voltage of 1.88 V (corresponding to 2.5 V in the Li/Li⁺ reference voltage).

In this way, the discharge capacity and the capacity efficiency were obtained for Examples 1a to 1f described above. The capacity efficiency indicates the ratio of the discharge capacity to the charge capacity. The results are shown in Table 1 below.

### (Example 1g)

A coated positive electrode active material and a battery were produced by the same procedure as in Example 1e, except that LZF having an average particle diameter of 0.8 µm was used instead of LZF having an average particle diameter of 5 µm.

### (Comparative Example 1)

A battery was produced by the same procedure as in Examples 1a to 1g, except that a positive electrode active material on which no coating layer was formed was used as a positive electrode material.

Battery evaluation was performed using the batteries of Example 1g and Comparative Example 1 described above under the same conditions as in Examples 1a to 1g. The results are shown in Table 1 below.

**[Table 1]**

| | Mass ratio between positive electrode active material and coating layer (positive electrode active material: coating layer) | Discharge capacity (mAh/g) | Capacity efficiency (%) | Interfacial resistance value (Ω) |
|---|---|---|---|---|
| Example 1a | 100: 3 | 150.6 | 85.0 | 97 |
| Example 1b | 100: 4 | 157.3 | 86.4 | 32 |
| Example 1c | 100: 5 | 160.4 | 83.8 | 20 |
| Example 1d | 100: 7 | 186.0 | 91.3 | 45 |
| Example 1e | 100: 10 | 187.0 | 93.3 | 13 |
| Example 1f | 100: 15 | 174.1 | 88.4 | 25 |
| Example 1g | 100: 10 | 190.7 | 92.9 | 3 |
| Comparative Example 1 | 100: 0 | 138.8 | 71.7 | 931 |

According to Table 1, the batteries of Examples 1a to 1g exhibited higher discharge capacities and capacity efficiencies than the battery of Comparative Example 1. Furthermore, the batteries of Examples 1d to 1g exhibited particularly higher discharge capacities and capacity efficiencies than the battery of Comparative Example 1. Moreover, the batteries of Examples 1a to 1f exhibited lower interfacial resistances than the battery of Comparative Example 1. Furthermore, Example 1g exhibited even higher discharge capacity than Example 1e. Moreover, Example 1g exhibited even lower interfacial resistance than Example 1e. In the case where the ratio of the median diameter Da of the positive electrode active material and the median diameter Dc of the coating material used in the coating step (Da/Dc) is 5 or more, the coating layer is densely formed on the surface of the positive electrode active material. This decreases the contact resistance of lithium ions between the surface of the positive electrode active material and the coating layer to effectively suppress an oxidation reaction between the positive electrode active material and the first solid electrolyte. Therefore, it is possible to more efficiently suppress generation of a high-resistance layer between the positive electrode active material and the first solid electrolyte.

### (Example 2)

In a glove box in an argon atmosphere with a dew point of -60°C or less and an oxygen value of 5 ppm or less, LiF and ZrF₄ as raw material powders were weighed in the molar ratio of LiF: ZrF₄ = 2: 1. These raw material powders were mixed in an agate mortar to obtain a mixture. A compound represented by a composition formula Li₂ZrF₆ was obtained by the same procedure as the steps shown in Examples 1a to 1f. The compound was pulverized in an agate mortar to obtain a powder having an average particle diameter of 5 µm as a coating material. A coated positive electrode active material and a battery were produced by the same procedure as the step shown in Example 1c.

### (Comparative Example 2)

A coated positive electrode active material and a battery were produced by the same procedure as in Example 1c, except that LiF was used instead of LZF as the coating material.

Battery evaluation was performed using the batteries of Example 2 and Comparative Example 2 described above under the same conditions as in Examples 1a to 1g. The results are shown in Table 2 below.

**[Table 2]**

| | Discharge capacity (mAh/g) | Capacity efficiency (%) | Interfacial resistance value (Ω) |
|---|---|---|---|
| Example 2 | 182 | 92.2 | 13 |
| Comparative Example 2 | 86 | 50.5 | 4055 |

According to Table 2, the battery of Example 2 exhibited higher discharge capacity and capacity efficiency than the battery of Comparative Example 2. Furthermore, the battery of Example 2 exhibited lower interfacial resistance than the battery of Comparative Example 2. From the comparison between the batteries of Examples 1a to 1f and 2 and the battery of Comparative Example 2, it can be seen that generation of a high-resistance layer between the positive electrode active material and the solid electrolyte can be suppressed efficiently by the coating material being a material containing lithium, zirconium, and fluorine. Furthermore, in the range in which the coating material is represented by the composition formula (1) and α, β, and γ satisfy 0.35 ≤ α ≤ 4, 1 ≤ β ≤ 1.1, and 4.75 ≤ γ ≤ 8, generation of a high-resistance layer between the positive electrode active material and the solid electrolyte can be suppressed more efficiently.

### (Example 3)

A battery was produced by the same procedure as in Example 1g, except that Li₃YBr₂Cl₄ was used as the first solid electrolyte of the positive electrode material and 2 mass% of a conductive additive (VGCF-H, manufactured by SHOWA DENKO K.K.) was added to the positive electrode active material.

### (Comparative Example 3)

A battery was produced by the same procedure as in Comparative Example 1, except that Li₃YBr₂Cl₄ was used as the first solid electrolyte of the positive electrode material and 2 weight% of a conductive additive (VGCF-H) was added to the positive electrode active material.

Battery evaluation was performed using the batteries of Example 3 and Comparative Example 3 described above under the same conditions as in Example 1g. The results are shown in Table 3 below.

According to Table 3, even in the case where a halide solid electrolyte is used as the first solid electrolyte of the positive electrode material, the battery of Example 3 can suppress generation of a high-resistance layer between the positive electrode active material and the solid electrolyte as compared with the battery of Comparative Example 3.

**[Table 3]**

| | Discharge capacity (mAh/g) | Capacity efficiency (%) | Interfacial resistance value (Ω) |
|---|---|---|---|
| Example 3 | 196 | 92.2 | 39 |
| Comparative Example 3 | 192 | 88.1 | 149 |

### (Example 4)

A coated positive electrode active material and a battery were produced by the same procedure as in Example 1g, except that LiNi_{0.5}Mn_{1.5}O₄ having an average particle diameter of 4 µm was used as the positive electrode active material, Li₃YBr₂Cl₄ was used as the first solid electrolyte, and 2 mass% of a conductive additive (VGCF-H) was added to the positive electrode active material.

### (Comparative Example 4)

A battery was produced by the same procedure as in Comparative Example 1, except that LiN_{0.5}Mn_{1.5}O₄ having an average particle diameter of 4 µm was used as the positive electrode active material, Li₃YBr₂Cl₄ was used as the first solid electrolyte, and 2 mass% of a conductive additive (VGCF-H) was added to the positive electrode active material.

Battery evaluation was performed using the batteries of Example 4 and Comparative Example 4 described above under the following conditions.

The batteries of Example 4 and Comparative Example 4 were placed in a thermostatic chamber at 25°C.

Constant-current charge was performed at a current value of 96 µA at 0.05 C rate (20-hour rate) with respect to the theoretical capacity of the battery, and the charge was terminated at a voltage of 4.38 V (corresponding to 5.0 V in the Li/Li⁺ reference voltage). Next, constant-voltage charge was performed at a voltage of 4.38 V, and the charge was terminated at a current value of 19.2 µA or less at 0.01 C rate. After the charge, impedance measurement by an alternating current impedance method was performed to obtain the interfacial resistance value between the coated positive electrode active material and the first solid electrolyte. The conditions for the impedance measurement were set to the voltage amplitude of 5 mV, the measurement frequency of 1 MHz to 0.1 Hz, and 25°C. The results are shown in Table 4. Next, discharge was performed at a current value of 96 µA, which was also at 0.05 C rate, and the discharge was terminated at a voltage of 2.38 V (corresponding to 3.0 V in the Li/Li⁺ reference voltage). Next, discharge was performed at a current value of 19.2 µA, which was also at 0.01 C rate, and the discharge was terminated at a voltage of 2.38 V.

In this way, the discharge capacity and the capacity efficiency were obtained for the batteries of Example 4 and Comparative Example 4 described above. The results are shown in Table 4 below.

According to Table 4, even in the case where LiNi_{0.5}Mn_{1.5}O₄, which is a 5 V-class positive electrode active material, was used as the positive electrode active material and charge was performed at a voltage of 5 V in the Li/Li⁺ reference, the battery of Example 4 can suppress generation of a high-resistance layer between the positive electrode active material and the solid electrolyte and exhibited high discharge capacity and capacity efficiency, as compared with the battery of Comparative Example 4.

**[Table 4]**

| | Discharge capacity (mAh/g) | Capacity efficiency (%) | Interfacial resistance value (Ω) |
|---|---|---|---|
| Example 4 | 121 | 78.9 | 301 |
| Comparative Example 4 | 29 | 45.7 | 14711 |

### INDUSTRIAL APPLICABILITY

The battery of the present disclosure is used, for example, as an all-solid-state lithium ion secondary battery.

## Claims

1. A coated positive electrode active material comprising:
a positive electrode active material; and
a coating layer coating at least partially a surface of the positive electrode active material, wherein
the coating layer includes Li, Zr, and F.

2. The coated positive electrode active material according to claim 1, wherein
a material of the coating layer is represented by the following composition formula (1),
Li_{α}Zr_{β}F_{γ} ... Formula (1)
where the symbols α, β, and γ satisfy 0 < α < 8, 0 < β ≤ 1.1, and 0 < γ ≤ 8.

3. The coated positive electrode active material according to claim 2, wherein
the symbols α, β, and γ satisfy 0.35 ≤ α ≤ 4, 1 ≤ β ≤ 1.1, and 4.75 ≤ γ ≤ 8.

4. The coated positive electrode active material according to claim 3, wherein
the symbols α, β, and γ satisfy 3.6 ≤ α ≤ 4, 1 ≤ β ≤ 1.1, and γ = 8.

5. The coated positive electrode active material according to claim 3, wherein
the symbols α, β, and γ satisfy 1.6 ≤ α ≤ 2, 1 ≤ β ≤ 1.1, and γ = 6.

6. The coated positive electrode active material according to any one of claims 1 to 5, wherein
a ratio of a mass of the coating layer to a mass of the positive electrode active material is 3/100 or more and 15/100 or less.

7. The coated positive electrode active material according to claim 6, wherein
the ratio of the mass of the coating layer to the mass of the positive electrode active material is 7/100 or more and 10/100 or less.

8. The coated positive electrode active material according to any one of claims 1 to 7, wherein
an average thickness of the coating layer is 1 nm or more and 300 nm or less.

9. The coated positive electrode active material according to claim 8, wherein
the average thickness of the coating layer is 2 nm or more and 200 nm or less.

10. The coated positive electrode active material according to any one of claims 1 to 9, wherein
the positive electrode active material includes lithium nickel cobalt manganese oxide.

11. A positive electrode material comprising:
the coated positive electrode active material according to any one of claims 1 to 10; and
a first solid electrolyte.

12. The positive electrode material according to claim 11, wherein
the first solid electrolyte includes a halide solid electrolyte.

13. The positive electrode material according to claim 12 or 13, wherein
the first solid electrolyte includes a sulfide solid electrolyte.

14. A battery comprising:
a positive electrode including the positive electrode material according to any one of claims 11 to 13;
a negative electrode; and
an electrolyte layer provided between the positive electrode and the negative electrode.

15. The battery according to claim 14, wherein
the electrolyte layer includes a second solid electrolyte, and
the second solid electrolyte includes a solid electrolyte having a composition that is the same as a composition of a solid electrolyte included in the first solid electrolyte.

16. The battery according to claim 14, wherein
the electrolyte layer includes a second solid electrolyte, and
the second solid electrolyte includes a halide solid electrolyte having a composition that is different from a composition of a solid electrolyte included in the first solid electrolyte.

17. The battery according to claim 14, wherein
the electrolyte layer includes a second solid electrolyte, and
the second solid electrolyte includes a sulfide solid electrolyte.

18. A manufacturing method for manufacturing the coated positive electrode active material according to claim 1, the manufacturing method comprising
performing processing on the positive electrode active material and a material of the coating layer by a dry particle composing method, wherein
the dry particle composing method includes imparting a mechanical energy generated by impact, compression, and shear to the positive electrode active material and the material of the coating layer.

19. The manufacturing method according to claim 18, wherein
a ratio of an average particle diameter Da of the positive electrode active material to an average particle diameter Dc of the material of the coating layer, Da/Dc, is 2 or more.

20. The manufacturing method according to claim 19, wherein
the ratio of the average particle diameter Da of the positive electrode active material to the average particle diameter Dc of the material of the coating layer, Da/Dc, is 5 or more.
